# EUROPEAN PATENT APPLICATION

(11) **EP 4 102 123 A1**
(43) Date of publication of application: **14.12.2022**
(21) Application number: 21178052.3
(22) Date of filing: 07.06.2021
(51) Int. Cl.: F16L 37/113, F16L 37/252

(54) **SAFETY TANK TRUCK COUPLING**

(71) Applicant: Home Technology & Investments B.V., 1906 CP Limmen (NL)
(72) Inventor: Van der Valk, Andries, Haarlem (NL); Metselaar, Rik, Limmen (NL); Hout, Terry, Limmen (NL)
(74) Representative: De Vries & Metman

(57) **Abstract**

A tank truck coupling for connecting tubular objects such as pipes or hoses is provided, comprising a male coupler comprising a sealing surface and screw locking cams and a mated female coupler comprising a sealing surface and locking claws for operably engaging the locking cams. The couplers are arranged to reversibly sealingly fix together by at least partial relative screw rotation in a coupled configuration with the locking claws and locking cams in operable engagement. The male coupler comprises a stop section for retaining a locking claw in a predetermined venting configuration of the coupled configuration providing a venting opening between the sealing surfaces. A male coupler for such coupling is also provided.

## Description

The present disclosure relates to a tank truck coupling for connecting tubular objects such as pipes or hoses, in particular a TW tank truck coupling, preferably a coupling according to Standard EN 14420-6 or DIN 28450, which Standard is herein incorporated by reference.

Such coupling is intended to link hoses with connections for the transport of liquids, solid matters and/or gases, with possible exception of liquid gas and steam.

Such coupling comprises a male coupler, or: V-type coupler, and a mated female coupler, or: M-type coupler, for coupling together in an insertion direction. The coupler may comprise a tubular body for the aforementioned transport, such as a VK-type or, respectively, an MK-type coupler, or provide a closure such as a plug or cap, such as a VB-type or, respectively, an MB-type coupler.

The male coupler comprises a sealing surface and screw locking cams, also referred to as curve elements. The mated female coupler comprises a sealing surface and locking claws. In an MK-type coupling the locking claws having radial locking lugs are provided on a tension ring that is rotary about a coupler body, or: gasket fixture. In the MB-type coupling the locking claws are fixedly integrated in the cap.

The couplers are arranged to reversibly sealingly fix together by screwing at least part of the couplers together provided by at least partial relative screw rotation in a coupled configuration with the locking claws and locking cams in operable engagement. For decoupling this is reversed: decoupling the couplers requires relative rotation of the claws and screw locking cams in opposite direction, or: "in a decoupling direction".

Such coupling is a standard in chemical and/or alimentary storage and/or transport. In many cases, the coupling may become pressurised due to chemical and/or physical situations and/or processes in/of/on the contents of the coupling and/or any attached apparatus subjecting a force to the coupling affecting opening thereof, e.g. one or more of chemical reaction, thermal expansion, evaporation, agitation, leakage and/or damage, etc. Also, some transported substance(s) may remain in the connected parts and itself pose a risk of contamination and/or hazard. Therefore, operators may want to decouple the coupling slowly and allow leaking of excess pressure prior to full decoupling, known as venting. However, also or in addition to the pressurisation, the coupling may require significant force due to initial forceful tightening of the coupling, damage, weather (e.g. icing), contamination and/or other causes. Therefore, decoupling the couplers may in practice require use of tools like wrenches and/or hammers the couplers may suddenly become undone. In particular in the case of builtup pressure, one or both of the couplers and attached apparel may be propelled away from each other. Thus, venting may not be possible and dangerous situations may arise.

Even after decades of use of the standard coupling, including numerous damages and injuries, an effective solution has not been found.

One attempt is provided by DE 203 10 934. DE 203 10 934 describing a pipe coupling of the subject type having a tension ring and an insertion connection with a locking element formed as a lever and safety pin. A ring-shaped seal has a female end which attaches to a male end. The tension ring provided on the female end and is rotatably attached to gripping claws. The locking element is provided on the tension ring and configured to engage screw locking cams of the male end. However, this system is complex, bulky and delicate, in particular compared to the remainder of the coupling itself and the use conditions of such coupling. Also, for decoupling, the lever must be accessed and operated bay an operator to allow passage of the screw locking cams of the male end for unscrewing the tension ring and taking the coupling apart. This is a burden on the operator and, depending on the orientation of the coupling relative to further objects potentially poses a risk to the operator.

Therefore, improvements to a coupling of the aforementioned kind remain desired.

To that end, herewith are provided a coupling of the aforementioned kind and a male coupler for such coupling, wherein the male coupler comprises a stop section for retaining a locking claw in a predetermined venting configuration of the coupled configuration providing a venting opening between the sealing surfaces.

Providing a predetermined venting configuration allows reliable opening. Retaining the claw in the venting configuration assists preventing accidental decoupling and allows controlled venting.

After careful consideration by the present inventor it has been found that, also within the confines of the Standard such a stop section may be realised in the male coupler. The male coupler may be a Standard EN 14420-6 or DIN 28450V-type coupler e.g. VK- or a VB-type.

The standard VK-type and VB-type male couplers have substantially identical locking cams whereas the standard MK-and MB-type female couplers differ significantly in the presence (MK) or absence (MB) of the tension ring and the associated construction of the locking claws. Providing the stop section on the male coupler therefore provides a versatile coupling which simplifies one or more of integration, acceptance, use and safety increase in different cases. Also, the male coupler may generally be more robust than the female coupler. Moreover, the stop section may be at least partly covered by the female coupler further increasing robustness.

The stop section may be passive, i.e. not require external elements and/or actuation thereof for maintaining the venting configuration and/or retaining the locking claw. In particular, the stop section may be devoid of movable elements. This provides robustness and may increase user-friendliness.

The stop section may restrict the relative screw rotation in at least an unscrewing direction in the coupled configuration. Therewith, sudden decoupling may be prevented.

The female coupler may comprise a tension ring comprising at least one of the locking claws. This facilitates separating (maintenance of) a relative orientation of the couplers and (screw) fixation of the couplers together by operable engagement of the locking cams and locking claws.

Retaining the claw may comprise a having the claw engage a stop section claw support surface and preventing decoupling along an insertion direction, e.g. providing a force in the insertion direction and/or at least in part against a screwing rotation such as by provision of a suitably oriented locking claw support surface. This can already provide a stable venting configuration wherein no forces and/or devices are required. The stop section claw support surface may e.g. have little or no screwing gradient, or even an oppositely-oriented screwing gradient to a screw gradient of the screw locking cams. Note that a gradient of the screw locking cams and of the locking claws may be mated, i.e. both the screw locking cam and the locking claw have the same helix angle about the axis, and a contact surface between the screw locking cams and of the locking claws may have a surface area corresponding to the size of the screw locking cam. Thus, contact pressure between the screw locking cams and the locking claws may be reduced.

E.g., at least one of the locking cams may comprise a first locking claw support surface for operably engaging a locking claw in a fixed coupled configuration, and a stop section associated with the at least one of the locking cams may comprise a second locking claw support surface for operably engaging, in particular in generally axial direction, and retaining in a venting coupled configuration a locking claw associated with the at least one of the locking cams. Then, it is preferred that the first locking claw support surface provides a first operable screw gradient and the second locking claw support surface provides a second operable screw gradient, wherein the first operable screw gradient is larger than, or opposite to, the second operable screw gradient. Thus, second operable screw gradient may be less steep, zero or opposite to the first screw gradient.

However, in a preferred embodiment, the stop section comprises a stop cam for operably engaging and blocking at least one of the locking claws and/or part of the tension ring, when provided. Thus the coupler and the stop section may be one or more of simple, reliable, small volume and robust.

When the stop section comprises a stop cam, the stop section may comprise a locking claw support surface for operably engaging at least one of the locking claws, in particular engaging that locking claw in generally axial direction, and/or retaining in the predetermined venting coupled configuration that locking claw. Blocking the locking claw, also in a nonventing coupled configuration and/or associated with a coupling without venting option, may assist securing the coupling against accidental decoupling of the couplers and/or assist connecting the couplers together from a decoupled configuration to a coupled configuration.

At least part of the stop cam may be overlapping in axial direction and facing the locking claw support surface wherein the locking claw support surface and the overlapping and facing claw support surface together define a space for accommodating and confining at least part of the at least one of the locking claws. By such confinement the venting configuration is secured.

The stop section may provide a barb to the locking cam. At least part of the stop cam may protrude from the locking claw support surface at an acute angle, which may open to the coupling direction. This may facilitate capturing at least part of the at least one of the locking claws when unscrewing. This further improves security, reducing options of the locking claw to "jump" over the stop cam when unscrewing.

The stop section may define a first minimum insertion depth of the male coupler into the female coupler in a coupling direction for passing the locking claw axially over and in a circumferential direction beyond, in particular in a screw (de-) coupling direction beyond, the at least part of the stop section from a first position on one side of the at least part of the stop section to a second position on an opposite side of the at least part of the stop section. The first minimum insertion depth may be larger than a second minimum insertion depth for at least one of an operable engagement of the locking claw with a locking claw support surface of the stop section rotary in the screw coupling direction beyond the second position, and the operable engagement of the locking claw with a locking cam.

Thus, the stop cam defines a first minimum insertion depth of the male coupler into the female coupler for passing the locking claw beyond the stop cam in decoupling direction larger than a second minimum insertion depth for operable engagement of the locking claw with the locking claw support surface of the locking cam and/or the locking claw support surface of the stop section.

By defining such first insertion depth larger than the second insertion depth, decoupling of the couplers is effectively provided with a barrier, providing safety. Also, coupling the couplers together may be done in a two-step process which may facilitate first connecting the couplers, then (re-) arranging parts of the coupling and/or attached apparel and/or (re-) arranging positions of hands and/or tools for a subsequent step of screwing the couplers together for fixation and sealing.

It may be preferred that at least one of the locking cams comprises a first locking claw support surface for operably engaging a locking claw, and a stop section associated with the at least one locking cam comprises a second locking claw support surface for operably engaging and retaining in a coupled configuration a locking claw associated with the predetermined locking cam, wherein the first and second locking claw support surfaces are separated by an at least axial step edge and/or discontinuation, and/or wherein the first locking claw support surface provides a first operable screw gradient and the second locking claw support surface provides a second operable screw gradient, and the first and second locking claw support surfaces are separated by a third locking claw support surface having a third locking claw support surface providing a third operable screw gradient larger than the second operable screw gradient.

Thus, opening of the coupling entails a sudden and/or accelerated transition from the first and second locking claw support surfaces so that the venting configuration may be established "suddenly", this may assist breaking the seal and prevent "sticking" of the sealing surfaces. Thus, an onset of venting may occur at or near a predetermined configuration, e.g. a predetermined relative position and/or relative orientation of the couplers. Provision of a third locking claw support surface may smoothen a transition between (operable engagement with) the first and second locking claw support surfaces, which may in particular simplify and/or assist coupling.

A stop cam and an onset of the first locking claw support surface in screw coupling direction may be arranged at the same axial position or a different axial position, wherein the stop cam may define a minimum insertion depth of the male coupler into the female coupler in a coupling direction for passing the locking claw axially over, and in a circumferential direction beyond, the at least part of the stop section from a first position on one side of the at least part of the stop section to a second position on an opposite side of the at least part of the stop section, larger than a minimum insertion depth for operable engagement of the locking claw with a the first locking claw support surface.

The stop section may provide a recess in and/or relative to a locking cam, in particular in axial direction, for accommodating and confining at least part of a locking claw associated with the locking cam in the venting coupled configuration. The recess may be defined on one side by the stop cam and on an opposite side in circumferential direction by at least part of the locking cam and/or the third locking claw support surface, when provided.

Thus, at least part of the stop section may be generally U-shaped in axial direction having a back and two upstanding legs in axial direction for receiving at least part of a locking claw between the legs and supporting the locking claw by the back. Then the back may provide a locking claw support surface.

The locking cam and a stop section associated with the locking cam may provide a ratchet profile in screwing direction comprising at least two locking claw support surface sections for successive operable engagement in a coupled configuration of a locking claw.

At least one locking cam and a stop section associated with the locking cam may provide a ratchet profile in screwing direction, in particular comprising at least two locking claw support surface sections for operably engaging in a coupled configuration a locking claw associated with the predetermined locking cam for successive engagement of the locking claw during screwing and/or unscrewing coupling.

The stop section may comprise of be formed as a hook extending from a locking cam in a decoupling direction.

The present coupler, and hence a coupling provided with it, may be one or more of simple, robust, and occupying a small volume. The coupling may occupy a volume no larger than a traditional coupling according to Standard EN 14420-6 or DIN 28450 and/or adhere to that Standard.

### BRIEF DESCRIPTION OF THE DRAWINGS

The above-described aspects will hereafter be more explained with further details and benefits with reference to the drawings showing a number of embodiments by way of example.
Fig. 1 shows a coupling in decoupled configuration, partly broken away;
Fig. 2 shows the coupling of Fig. 1 in a coupled and sealed configuration, in axial cross-section view;
Fig. 3 shows a male tubular coupler of the coupling of Figs. 1-2 in perspective view;
Fig. 4 shows a male blind coupler (blind stop or dust cap) of the coupling of Figs. 1-2 in perspective view;
Fig. 5 shows an improved male coupler for the coupling of Figs. 1-2 in perspective view;
Fig. 6 shows the improved coupler of Fig. 5 in perspective view from another viewing angle;
Fig. 7 shows a detail of the coupler of Figs. 5-6;
Fig. 8 shows another improved male coupler for the coupling of Figs. 1-2 in perspective view;
Fig. 9 shows a detail of the coupler of Fig. 8;
Fig. 10 shows a detail of another improved male coupler.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc.

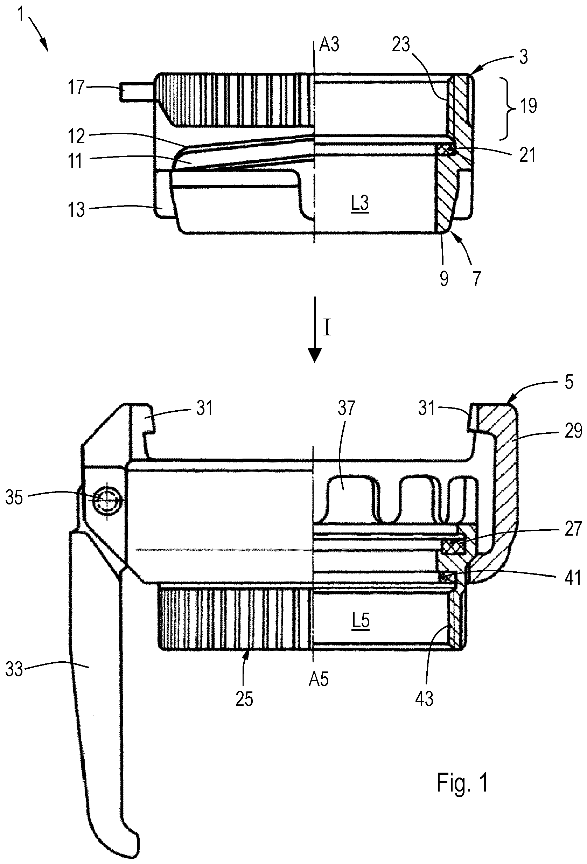

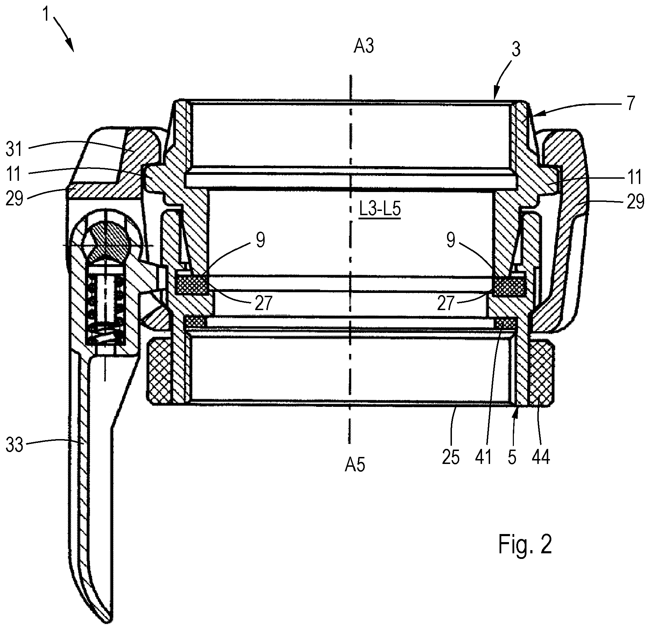

Figs. 1 and 2 show a coupling 1 according to Standard EN 14420-6 in decoupled configurations and in coupled configurations respectively.

The coupling 1 comprises a male coupler 3 and a mated female coupler 5 for coupling together in an insertion direction I along an axis A3-A5 of the coupling, in accordance with an axis A3 of the male coupler 3 and an axis A5 of the female coupler 5 which coincide in the coupled configuration. Both couplers are tubular providing a continuous lumen L3-L5 of the coupling. References to cylindrical coordinates (axial, radial, circumferential, etc.) relate to the respective axes A3, A5, A3-A5, of the couplers 3, 5, or, respectively and as the case may be, the coupling 1 as a whole.

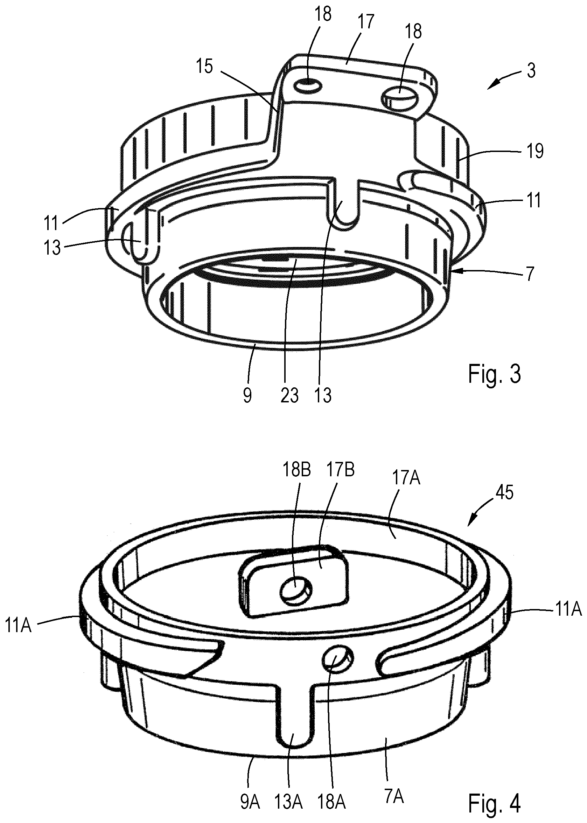

The male coupler 3 is shown in Fig. 3. The shown coupler 3 is of the VK-type and comprises a tubular body 7 having a lumen L3 for the transport of liquids, solid matters and gases, provided a sealing surface 9 and screw locking cams 11 for operable engagement with claws of the female coupler 5, see below, in particular, each screw locking cam 11 provides a locking claw support surface 12 for the operable engagement. The coupler 3 further comprises lugs 13 for engagement with the female coupler 5, see below, and flanges 15 in axial direction and a radial flange 17 with openings 18 for accommodating a (pad-) lock and/or a chain, etc. (see Fig. 3).

The male coupler 3 may be provided with different suitable rear connection 19 such as, or for connection with, a pipe, a hose, a manifold etc. e.g. a seal 21 and a screw thread connection 23 (only generally indicated) for connection with a pipe (not shown).

The shown female coupler 5 is of the MK-type and comprises a tubular body 25 having a lumen L5 for the transport of liquids, solid matters and gases, provided with a gasket providing a sealing surface 27. The coupler comprises a tension ring 29 rotary about the coupler body 25 provided with locking claws 31 for operably engaging the locking cams 11 of the male coupler. The tension ring 29 is provided with an optional lever 33 rotary about a pivot 35. The female coupler body 25 comprises teeth 37 for engagement with the lugs 13 upon insertion of the male coupler 3 into the female coupler 5. When so inserted, the lugs 13 and teeth 37 interengage and prevent relative rotation of the coupler bodies 7 and 25, ensuring that rotation of the tension ring 29 about the female coupler body 25 also entails rotation about the male coupler body 7 and its male locking cams 11. Thus, a screw rotation of the tension ring 29 about interengaging coupler bodies 7, 25 facilitates operable engagement of the locking claws 31 with the screw locking cams 11 for fixing the couplers together and pressing the sealing surfaces 9, 27 together along the axis A3-A5, see Fig. 2. Referring back to Figs. 1-2, it may be seen that (the locking claw support surface 12 of) the screw locking cams 11 and the locking claws 31 comprise a mated gradient for screwing, so that, likewise decoupling involves partial unscrewing the coupling 1, i.e. rotating (the claws 31 via) the tension ring 29 about the axis A3-A5. Note that for coupling, each locking claw 31 of the female coupler 5 must (be able to) pass between adjacent locking cams 11 of the male coupler 3.

The female coupler 5 may be provided with different suitable rear connection 39 such as, or for connection with, a pipe, a hose, a manifold etc. e.g. a seal 41 and a screw thread connection 43 (only generally indicated) for connection with a pipe (Fig. 1). In Fig. 2 an optional external hose 44 is partly shown.

A female coupler of the closure type, e.g. a dust cap of the MB-type is not shown in this document but is well known, and described in the Standard. In brief, such coupler comprises locking claws for operable interaction with the screw locking cams 11 of the male coupler 3 for closing off the lumen L3 of the tubular male coupler 3.

Fig. 4 shows a male closure coupling 45, in particular a blind stop or dust cap, of the VB-type for replacing the male coupler 3 of the coupling 1 and closing off the lumen L5 of the female coupler 5. The closure coupling 45 comprises a closing body 47 and, like the male coupler 3, the closure coupling 45 is provided a sealing surface 9A and screw locking cams 11A for operable engagement with locking claws of the female coupler 5. The closure coupling 45 further comprises lugs 13A for engagement with the female coupler 5, and flanges 17A, 17B with an opening 18A, 18B for accommodating a (pad-) lock and/or a chain, etc.

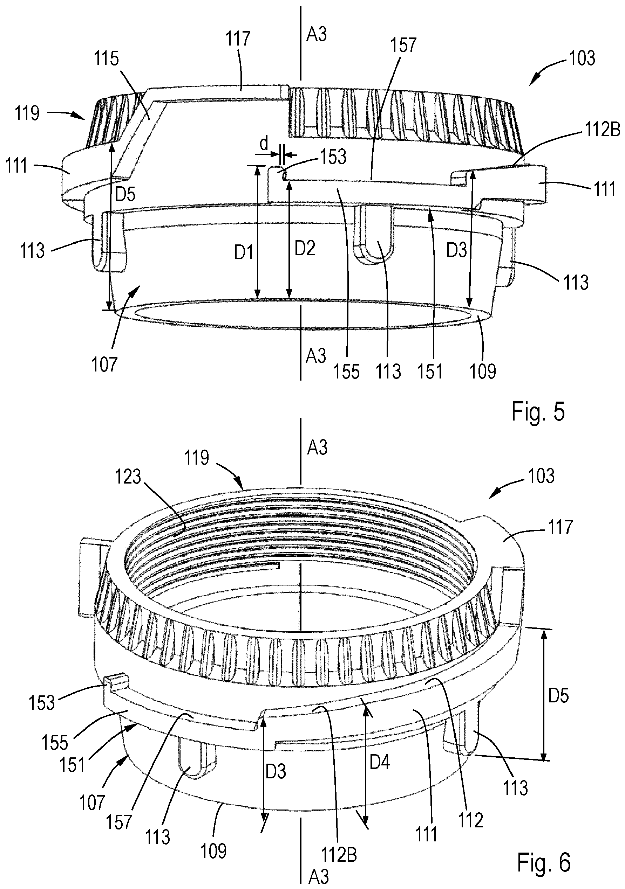

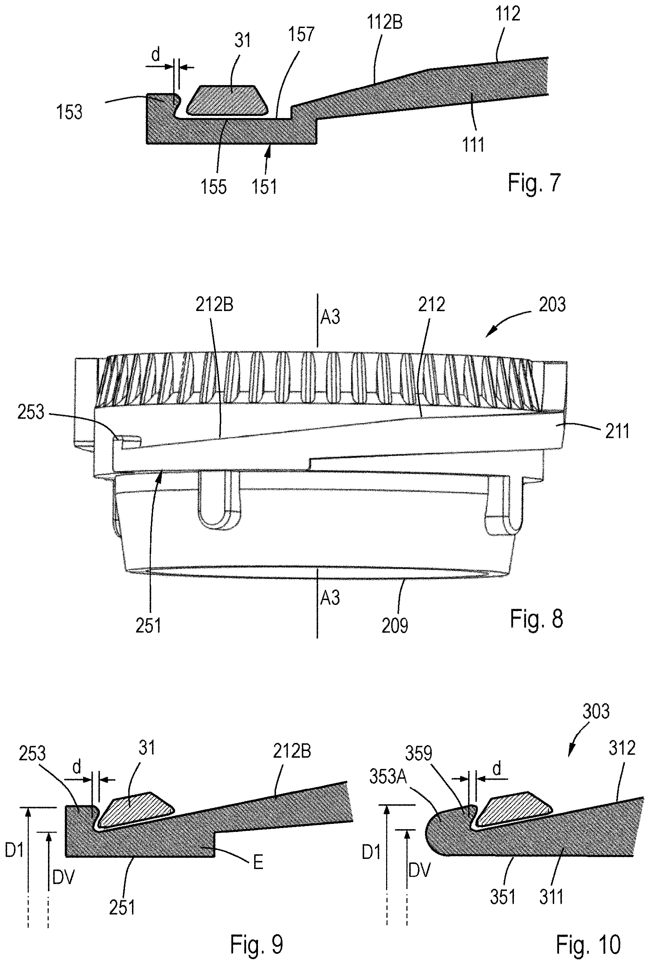

Fig. 5-6 show an embodiment of an improved male coupler 103 as provided herewith; Fig. 7 depicts a detail, including a locking claw 31 of a mated female coupler.

The male coupler 103 is substantially similar to the male coupler 3 of Figs. 1-3, and elements that are at least substantially identical or that perform an at least substantially identical function are denoted by the same numeral, raised by 100.

The coupler 103 is also generally of the VK-type and comprises a tubular body 107 having a lumen L3 along an axis A3 for the transport of liquids, solid matters and gases, and it is provided with a sealing surface 109 and screw locking cams 111 for operable engagement with claws of the female coupler 5, see below. In particular, each screw locking cam 111 provides a locking claw support surface 112 for the operable engagement, preferably the locking claw support surfaces 112 of each screw locking cam are substantially the same. The coupler 103 further comprises lugs 113 for engagement with the female coupler 5, see below, and optional flanges 115 in axial direction and an optional radial flange 117 with optional openings 118 for accommodating a (pad-) lock and/or a chain, etc.

The male coupler 103 may be provided with different suitable rear connection 119 such as, or for connection with, a pipe, a hose, a manifold etc. e.g. a seal 121 and a screw thread connection 123 for connection with a pipe (not shown).

Significantly different from the male coupler 3, the improved male coupler 103 comprises a stop section 151 for retaining a locking claw 31 of a female coupler such as the female coupler 5 (or a female dust cap etc.). The stop section 151 shown in Figs. 5-6 comprises a stop cam 153 and a locking claw support cam 155. The locking claw support cam 155 extends from the locking cam 111 providing a locking claw support surface 157. Thus, the stop section 151 forms a hook extending from the locking cam 111 in a decoupling direction (Fig. 7).

As set out in more detail below, the stop section 151 is configured for retaining a locking claw in operable engagement with the locking claw support surface 157 and thereby determine a venting configuration of the coupling in a coupled configuration providing a venting opening between the sealing surfaces 109, 27.

After careful consideration, it has now been found that such stop section 151 may be provided to a VK-type coupler and to a VB-type coupler without affecting sizes required by the Standard EN 14420-6 or DIN 28450 for establishment of a secure seal, by circumferentially shortening the screw locking cams to the benefit of the stop section; operable screw gradients, insertion depths and/or other sizes may be left unaffected.

Best seen in Fig. 6, the locking cam 111 comprises a first locking claw support surface 112 for operably engaging a locking claw of a mated female coupler, and having a first operable screw gradient, e.g. "13 mm" or "14 mm" as specified in the Standard EN 14420-6. In the shown embodiment, the locking cam 111 comprises an optional lead-in locking claw support surface 112B for operably engaging a locking claw of a mated female coupler and guiding the locking claw onto the first locking claw support surface 112. The lead-in locking claw support surface 112B has a second operable screw gradient, larger than the first locking claw support surface 112, i.e. being steeper, for the leading-in.

The stop cam 153 extends in axial direction up to a distance D1 from the sealing surface 109. The locking claw support surface 157 is located in axial direction a distance D2 from the sealing surface 109, and here, as an option is generally perpendicular to the axis A3 of the coupler but it may have a screw gradient. A coupling end of the lead-in locking claw support surface 112B is located in axial direction a distance D3 from the sealing surface 109, a transition between lead-in locking claw support surface 112B and the locking claw support surface 112 is located in axial direction a distance D4 from the sealing surface 109. Due to the operable screw gradient of the first locking claw support surface 112 of the locking cam 111, part of the surface 112 at a fixation end is located in axial direction a distance D5 > D4 from the sealing surface 109.

The distances D1-D5 define an insertion depth of the male coupler into the female coupler. D5 is dimensioned such that, when the locking cam 111 is operably engaged by the locking claw of a mated female coupler 5 arranged at or near the fixation end in nor screwing direction, the thus-formed coupling of male and female couplers is sealed by contact and contact force between the sealing surfaces 109, 27 of the male and female couplers (see Fig. 2).

On the other hand, D2 is so dimensioned that when the locking claw 31 is unscrewed from the locking cam 111 and operably engages the locking claw support surface 157 of the locking claw support cam 155 (see Fig. 7), the coupler body 25 of the female coupler 5 and the coupler body 107 of the male coupler 103, when so coupled, are spaced axially apart in a venting configuration and provide a venting opening between the respective sealing surfaces 109, 27 (not shown).

Upon unscrewing the couplers 103, 5, a venting opening between the sealing surfaces 109, 27 may possibly already be achieved with the locking claw arranged at an insertion distance between D3 and D5, in particular between D4 and D5. However, due to the operable screwing gradient, the relevant insertion depth may not be clearly defined and depend on properties of the sealing gasket of the female coupler, e.g. the resilience thereof. The relatively sudden elongation of the coupling / separation of the couplers associated with a transition from D3 to D2 (recall that D3 > D2) may assist establishing the venting opening.

The stop cam 153 of the stop section 151 may operably engage and block at least one of the locking claws; see Fig. 7. Thus, a relative screw rotation of the tension ring in an unscrewing direction is restricted in the coupled configuration.

However, if the operable screw gradient of the stop section 151 is sufficiently small, in particular significantly smaller than the first operable screw gradient of the locking cam 111 such as zero angle or close to zero helix angle about the axis A3, the locking claw 31 may be retained in the predetermined venting configuration also without assistance of and/or securing by a locking cam 153, in which case the latter may be omitted.

However, in another embodiment of a male coupler 203, a stop cam 253 is provided as before but a locking claw support cam of a stop section is omitted; see Figs. 8-9, showing a male coupler 203 which is substantially similar to the male couplers 3, 103 of Figs. 1-7, and elements that are at least substantially identical or that perform an at least substantially identical function are denoted by the same numeral, raised by a further 100.

In this embodiment, the stop cam 253 is configured for operably engaging and blocking at least one of the locking claws of a mated female connector, e.g. female connector 5, operably engaging the locking claw support surface 212 of the locking cam 211 or a lead-in locking claw support surface 212B, wherein the respective surface 212, 212B is configured to provide a suitable insertion depth DV for establishing and maintaining a venting opening and determining a venting configuration. In this embodiment the stop section may be understood as the stop cam 253 and part of the locking claw support surface 212 or 212B for supporting the locking claw 31 when operably engaged by the stop cam 253 (e.g. see Fig. 9). Note that a step edge E on the locking cam 211 is optional and may be omitted.

In preferred embodiments, as shown, D1 > D2 or D1 > DV. Thus, the stop cam 153, 253 defines a minimum insertion depth of the male coupler 103, 203 into the female coupler 5 in an insertion direction I for passing the locking claw 31 axially over, and in a circumferential direction beyond, the stop cam 153, 253 at least part of the stop section from a first position on one side of the stop cam 153, 253 to a second position on an opposite side of the stop cam 153, 253, larger than a minimum insertion depth for operable engagement of the locking claw 31 with a locking claw support surface 157, 212B. This facilitates capturing the locking claw 31 by the stop cam 153, 253, operably engaging and blocking a locking claw 31 of the female coupler and retaining the locking claw 31 in the predetermined venting configuration.

In the shown embodiments, a top part of the stop cam 153, 253 is overlapping in axial direction and facing the locking claw support surface 157, 212B respectively for a distance d, and together with the locking claw support surface 157, 212B a space for accommodating and confining at least part of the locking claw 31 is defined. Thus, the stop cam 153, 253 and the locking claw support surface 157, 212B respectively define an acute angle opening to the coupling direction for capturing the locking claw 31 when the latter is moved in decoupling (unscrewing) direction. Note that the locking claw may have a tapered cross shape seen in radial view, as also specified in the Standard EN 14420-6, e.g. see also Figs. 7, 9, simplifying the capturing and possibly urging the locking claw 31 and the locking claw support surface 157, 212B together.

The overlap of the stop cam 153, 253 may further provide robustness in case of heavy use and/or wear: the part overlapping to length d may wear off in use but then still remain an at least partly overlapping portion for capturing a locking claw 31. If the stop cam 153, 253 would be purely axial and/or have a straight angle to an adjacent locking claw support surface 157, 212B, or even an obtuse angle, the stop cam 153, 253 could have or obtain through wear a locking-claw-engaging-surface that is directed at least in part in a direction allowing decoupling, rather than providing a locking-claw-capturing structure. In such case, at least a blocking functionality of the stop cam 153, 253, could be adversely affected or even be absent.

In Fig. 10, a detail of another embodiment of a male coupler 303 is shown wherein the locking cam 353A has a top surface 359 providing a locking claw support surface section having a screw gradient, for serving as a lead in surface for coupling (a locking claw of) a female coupler with the male coupler 303. The locking cam 311 and the adjacent locking claw support surface section 312 thus provides a ratchet profile in screwing direction comprising two locking claw support surface sections 359, 312 for successive operable engagement in a coupled configuration of a locking claw 31.

The disclosure is not restricted to the above described embodiments which can be varied in a number of ways within the scope of the claims.

For instance the couplers may have another diameter and/or a different number of screw locking cams and/or lugs for engagement with the female coupler, and/or, in case of a female coupler: different number of locking claws. Gradients of locking claw support surfaces may differ.

Elements and aspects discussed for or in relation with a particular embodiment may be suitably combined with elements and aspects of other embodiments, unless explicitly stated otherwise.

## Claims

1. Tank truck coupling for connecting tubular objects such as pipes or hoses, in particular a TW tank truck coupling, preferably according to Standard EN 14420-6 or DIN 28450, comprising a male coupler (103, 203, 303) comprising a sealing surface (109, 209) and screw locking cams (111, 211, 311) and a mated female coupler (5) comprising a sealing surface (27) and locking claws (31) for operably engaging the locking cams (111, 211, 311),
wherein the couplers (103, 203, 303; 5) are arranged to reversibly sealingly fix together by at least partial relative screw rotation in a coupled configuration with the locking claws (31) and locking cams (111, 211, 311) in operable engagement,
wherein the male coupler (103, 203, 303) comprises a stop section (151, 251, 351) for retaining a locking claw (31) in a predetermined venting configuration of the coupled configuration providing a venting opening between the sealing surfaces.

2. Coupling according to claim 1, wherein the stop section (151, 251, 351) restricts the relative screw rotation in at least an unscrewing direction in the coupled configuration.

3. Coupling according to any preceding claim, wherein the stop section (151, 251, 351) comprises a stop cam (153, 253, 353) for operably engaging and blocking at least one of the locking claws (31) and/or part of a tension ring (29) of the female coupler (5) comprising at least one of the locking claws.

4. Coupling according to any preceding claim, wherein at least part of the stop section (151, 251, 351), preferably a stop cam (153, 253, 353), defines a first minimum insertion depth (D1) of the male coupler (103, 203, 303) into the female coupler (5) in an insertion direction (I) for passing the locking claw (31) axially over, and in a circumferential direction beyond, the at least part (153, 253, 353) of the stop section (151, 251, 351) from a first position on one side of the at least part of the stop section to a second position on an opposite side of the at least part of the stop section, which first minimum insertion depth (D1) is larger than a second minimum insertion depth (D2) for:
an operable engagement of the locking claw (31) with a locking claw support surface (157) of the stop section (151) rotary in the screw coupling direction beyond the second position, and/or the operable engagement of the locking claw (31) with a locking cam (153, 253, 353).

5. Coupling according to any preceding claim, wherein the male coupler (103, 203, 303) is a coupler according to any one of the subsequent claims.

6. Male coupler (103, 203, 303) for a tank truck coupling for connecting tubular objects such as pipes or hoses, in particular a TW tank truck coupling and preferably according to Standard EN 14420-6 or DIN 28450, according to any one of the preceding claims,
wherein the coupler (103, 203, 303) comprises a sealing surface (109, 209) and screw locking cams (111, 211, 311) for operably engaging locking claws (31) of a mated female coupler (5) comprising a sealing surface (27), the male and female couplers (103, 203, 303; 5) being arranged to reversibly sealingly fix together by at least partial relative screw rotation in a coupled configuration with the locking claws (31) and locking cams (111, 211, 311) in operable engagement,
wherein the male coupler (103, 203, 303) comprises a stop section (151, 251, 351) for retaining a locking claw (31) in a predetermined relative position to establish a predetermined venting configuration providing a venting opening between the sealing surfaces (109, 209; 27).

7. Coupler (103, 203, 303) according to claim 6, wherein the stop section (151, 251, 351) comprises a stop cam (153, 253, 353) for operably engaging and blocking a locking claw (31) of the female coupler (5) and/or retaining a locking claw (31) in a predetermined venting configuration of the coupled configuration providing a venting opening between the sealing surfaces.

8. Coupler (103, 203, 303) according to any one of claims 6-7, wherein the stop section (151, 251, 351) comprises a locking claw support surface (157, 212B, 312) for operably engaging and retaining in the predetermined venting configuration at least one of the locking claws (31), and wherein at least part of the stop cam (153, 253, 353) is overlapping in axial direction and facing the locking claw support surface (157, 212B, 312) and together with the latter defining a space for accommodating and confining at least part of the at least one of the locking claws (31).

9. Coupler (103, 203, 303) according to any one of claims 6-8, wherein the stop section (151, 251, 351) provides a barb to the locking cam (311) and/or wherein at least part of the stop cam (153, 253, 353) protrudes from the locking claw support surface (157, 212B, 312) at an acute angle opening to the coupling direction.

10. Coupler (103, 203, 303) according to any one of claims 6-9, wherein at least part of the stop section (151, 251, 351), preferably the stop cam (153, 253, 353) when present, defines a first minimum insertion depth (D1) of the male coupler (103, 203, 303) into the female coupler (5) in an insertion direction for passing the locking claw (31) axially over, and in a circumferential direction beyond, the at least part (153, 253, 353) of the stop section (151, 251, 351) from a first position on one side of the at least part of the stop section to a second position on an opposite side of the at least part of the stop section, which first minimum insertion depth (D1) is larger than a second minimum insertion depth (D2) for:
an operable engagement of the locking claw (31) with a locking claw support surface (157) of the stop section (151) rotary in the screw coupling direction beyond the second position, and/or the operable engagement of the locking claw (31) with a locking cam (153, 253, 353).

11. Coupler (103, 203) according to any one of claims 6-10, wherein at least one of the locking cams (111, 211) comprises a first locking claw support surface (112, 212) for operably engaging a locking claw in a fixed coupled configuration, and
wherein a stop section (151, 251) associated with the at least one of the locking cams (111, 211) comprises a second locking claw support surface (157, 212B) for operably engaging and retaining in a venting coupled configuration a locking claw (31) associated with the at least one of the locking cams (111, 211) ,
wherein the first locking claw support surface (112, 212) provides a first operable screw gradient and the second locking claw support surface (157, 212B) provides a second operable screw gradient,
wherein the first operable screw gradient is larger than, or opposite to, the second operable screw gradient.

12. Coupler (103, 203) according to any one of claims 6-11, wherein at least one of the locking cams (111, 211) comprises a first locking claw support surface (112, 212) for operably engaging a locking claw (31), and
wherein a stop section (151, 251, 351) associated with the at least one locking cam (111, 211) comprises a second locking claw support surface (157, 212B) for operably engaging and retaining in a coupled configuration a locking claw (31) associated with the at least one locking cam (111, 211),
wherein the first and second locking claw support surfaces (112, 212; 157, 212B) are separated by an at least axial step edge and/or a discontinuation, and/or
wherein the first locking claw support surface provides a first operable screw gradient and the second locking claw support surface provides a second operable screw gradient and the first and second locking claw support surfaces are separated by a third locking claw support surface having a third locking claw support surface providing a third operable screw gradient larger than the second operable screw gradient.

13. Coupler (103, 203, 303) according to any one of claims 6-12, wherein the stop section (151, 251, 351) provides a recess in and/or relative to a locking cam (111, 211, 311) for accommodating and confining at least part of a locking claw (31) associated with the locking cam (111, 211, 311)in the venting coupled configuration.

14. Coupler (303) according to any one of claims 6-13, wherein at least one of the locking cam (311) and a stop section (351) associated with the locking cam (311) provide a ratchet profile in screwing direction comprising at least two locking claw support surface sections (353A, 312) for successive operable engagement in a coupled configuration of a locking claw (31) .

15. Coupler (103, 203) according to any one of claims 6-14, wherein the stop section (151, 251) comprises a hook extending from a locking cam (111, 211) in a decoupling direction.
